# FASCICULE DE BREVET EUROPEEN

(11) **EP 2 307 269 B1**
(45) Date de publication et mention de la délivrance du brevet: **16.01.2013**
(21) Numéro de dépôt: 09766092.2
(22) Date de dépôt: 19.06.2009
(51) Int. Cl.: B63B 27/04, B63B 35/00, E02B 17/00, F03D 11/04

(54) **STRUCTURE DE TRANSPORT ET D'INSTALLATION EN MER D'AU MOINS UNE ÉOLIENNE OU HYDROLIENNE ET PROCÉDÉS DE TRANSPORT ET D'INSTALLATION EN MER D'AU MOINS UNE ÉOLIENNE OU HYDROLIENNE**
STRUKTUR ZUR OFFSHORE-INSTALLATION MINDESTENS EINER WINDTURBINE ODER EINES UNTERWASSERGENERATORS UND VERFAHREN FÜR DEN TRANSPORT UND DIE OFFSHORE-INSTALLATION MINDESTENS EINER WINDTURBINE ODER EINES UNTERWASSERGENERATORS
STRUCTURE FOR THE OFFSHORE INSTALLATION OF AT LEAST ONE WIND TURBINE OR UNDERWATER GENERATOR, AND METHODS FOR TRANSPORT AND OFFSHORE INSTALLATION OF AT LEAST ONE WIND TURBINE OR UNDERWATER GENERATOR

(30) Priorité: 20.06.2008 FR 0854097
(43) Date de publication de la demande: 13.04.2011
(73) Titulaire: Technip France, 92400 Courbevoie (FR)
(72) Inventeur: CHOLLEY, Jean-Marc, F-95150 Taverny (FR); LUQUIAU, Eric, F-78500 Sartrouville (FR)
(74) Mandataire: Blot, Philippe Robert Emile
(86) Numéro de dépôt international: PCT/FR2009/051175
(87) Numéro de publication internationale: WO 2009/153530

(56) Documents cités:
- WO-A-03/066427
- WO-A-03/093584
- DE-U1- 20 010 086
- US-A1- 2004 262 926

## Description

La présente invention concerne une structure de transport et d'installation en mer d'au moins une éolienne ou hydrolienne.

L'invention concerne également des procédés de transport et d'installation en mer d'au moins une éolienne ou hydrolienne au moyen d'une telle structure.

De manière classique, les éoliennes ou les hydroliennes comportent un mât portant une nacelle renfermant des moyens de production d'électricité entraînés par des palles.

Le mât est monté sur un socle fixé sur le sol ou sur un fond marin pour une installation en mer.

Dans le cas des éoliennes, la nacelle est fixée à l'extrémité supérieure du mât et les palles sont entraînées en rotation par le vent.

Dans le cas des hydroliennes, la nacelle supportée par le mât est placée au-dessous de la surface de l'eau et les palles sont entraînées en rotation par le flux et le reflux de l'eau.

L'installation des éoliennes ou des hydroliennes en mer consiste à poser et à fixer sur le fond marin le socle, puis à amener, le plus souvent par un navire de transport l'autre partie des éoliennes ou hydroliennes, c'est à dire le mât portant la nacelle et les palles.

Le mât portant la nacelle et les palles est posé sur le socle selon différentes méthodes.

Une méthode connue consiste à transporter le mât en position verticale et à suspendre ce mât à un système de levage, comme par exemple une grue supportée par un navire, puis à descendre progressivement le mât par la grue pour engager son extrémité inférieure dans le socle.

Une autre méthode connue consiste à transporter le mât équipé de sa nacelle et de ses palles en position horizontale sur un navire, puis à basculer le mât en position verticale et à descendre progressivement le mât par une colonne de guidage afin d'engager son extrémité inférieure dans le socle.

Mais, ces méthodes connues présentent un inconvénient important.

En effet, le mât au cours de sa descente progressive est porté par un navire qui est sujet au mouvement de la houle si bien que le mât oscille ce qui oblige à maintenir son extrémité inférieure pour l'engager dans le socle.

Une fois son extrémité inférieure engagée dans le socle, le mât subit toujours les mouvements du navire ce qui peut induire des efforts ou des contraintes importantes dans le socle et le flambement du mât tant que ce mât est relié au navire.

C'est le cas notamment de la structure de transport et d'installation en mer d'une éolienne décrite dans le document WO 03/066427.

On connaît également dans le document WO 03/093584 une structure de transport et d'installation en mer d'une éolienne dans laquelle la structure flottante est fixée rigidement au sol lors des opérations d'installation et, de ce fait, cette structure ne permet pas de compenser les déplacements horizontaux de la coque par rapport au mât après son introduction dans le socle.

L'invention a pour but de proposer une structure de transport et d'installation en mer d'au moins une éolienne ou hydrolienne qui évite cet inconvénient.

L'invention a donc pour objet une structure de transport et d'installation en mer d'au moins une éolienne ou hydrolienne comprenant une nacelle et des palles portées par un mât destiné à être monté sur un socle ancré sur le fond marin, caractérisé en ce que la structure comporte :
- une coque flottante en forme de U munie de deux branches latérales opposées et parallèles, portant chacune au moins une jambe déplaçable verticalement par rapport à la coque en flottaison au moyen de mécanismes de déplacement, et
- au moins un ensemble de support de ladite au moins éolienne ou hydrolienne, composé de deux navettes opposées et associées chacune à une jambe et portant chacune deux paires de bras, respectivement supérieure et inférieure, déplaçables par pivotement autour d'un axe horizontal entre une position escamotée et une position active basculée contre le mât de l'éolienne ou de l'hydrolienne, lesdits bras de la paire de bras supérieurs comportant des moyens de compensation des déplacements horizontaux de la coque par rapport au mât après son introduction dans le socle et après le basculement de la paire de bras inférieurs en position escamotée.

Selon d'autres caractéristiques de l'invention :
- la structure comporte deux ensembles symétriques de support chacun d'un mât d'une éolienne ou d'une hydrolienne,
- chaque navette comporte des moyens de verrouillage sur la jambe correspondante,
- chaque bras de la paire de bras supérieurs présente une longueur sensiblement également à la hauteur du mât,
- chaque bras de la paire de bras inférieurs présente une longueur sensiblement égale à la moitié de la distance séparant les bords intérieurs des deux branches latérales de la coque,
- les extrémités libres des bras de la paire de bras inférieurs comportent un ensemble de serrage du mât,
- les moyens de compensation montés aux extrémités libres des bras de la paire de bras supérieurs comportent un ensemble de support du mât par l'intermédiaire d'un collier ménagé sur ledit mât et des moyens de coulissement pour les déplacements horizontaux de la coque par rapport au mât après son introduction dans le socle et le basculement de la paire de bras inférieurs en position écartée,
- les moyens de coulissement de l'ensemble de support comprennent, d'une part, une plaque munie d'un logement en U, fixée à l'extrémité libre d'un des bras de la paire de bras supérieurs et destinée à coopérer avec un système de verrouillage monté à l'extrémité libre de l'autre bras de la paire de bras supérieurs et, d'autre part, une platine munie d'un logement en U et déplaçable par des organes de roulement sur la plaque selon un plan parallèle à l'ensemble de support du mât,
- les directions de déplacement de la platine sur la plaque forment entre elles un angle de 120°,
- la platine comporte un loquet de fermeture du logement en U,
- les logements en U, respectivement de la plaque et de la platine, sont dirigés perpendiculairement à l'axe longitudinal de la coque,
- les logements en U, respectivement de la plaque et de la platine, sont dirigés dans l'axe longitudinal de la coque en direction de la partie ouverte de ladite coque.

L'invention a également pour objet un procédé de transport et d'installation en mer d'au moins une éolienne ou hydrolienne au moyen d'une structure telle que précédemment définie, caractérisé en ce qu'il consiste en les étapes suivantes :
- à positionner la structure à proximité d'une zone de chargement de l'éolienne ou de l'hydrolienne,
- à placer les jambes en position haute et les navettes en position basse en appui contre la coque avec les bras des deux paires de bras dans la position escamotée,
- à soulever l'éolienne ou l'hydrolienne et à placer le mât de ladite éolienne ou hydrolienne entre les deux branches latérales de la coque,
- à basculer en position active le bras comportant les logements en U de la paire de bras supérieurs pour placer le mât dans les logements en U au-dessous du collier,
- à basculer en position active l'autre bras de la paire de bras supérieurs et à verrouiller lesdits bras entre eux,
- à fermer le logement en U de la platine par le loquet,
- à descendre le mât pour amener le collier en appui sur la platine,
- à basculer simultanément en position active les bras de la paire de bras inférieurs pour maintenir le mât à sa partie inférieure,
- à verrouiller la platine aux bras,
- à déplacer la structure portant ladite au moins éolienne ou hydrolienne jusqu'à un site d'installation sur un socle préalablement installé sur le fond marin,
- à abaisser les jambes et à verrouiller chaque navette sur la jambe correspondante,
- à remonter les jambes pour soulever le mât au moyen des navettes et des paires de bras,
- à déplacer la structure pour positionner le mât dans l'alignement du socle,
- à descendre par les jambes, les navettes et les paires de bras pour engager le mât dans le socle,
- à déverrouiller la platine des bras,
- à basculer les bras de la paire de bras inférieurs en position escamotée, les mouvements horizontaux de la coque étant repris par les moyens de compensation de la paire de bras supérieurs,
- à descendre par les jambes, les navettes et la paire de bras supérieurs pour poser le mât sur le socle,
- à ouvrir le logement en U de la platine,
- à déverrouiller les bras de la paire de bras supérieurs,
- à basculer les bras de la paire de bras supérieurs en position escamotée,
   et
- à retirer la structure.

L'invention a aussi pour objet un procédé de transport et d'installation en mer d'au moins une éolienne ou hydrolienne au moyen d'une structure telle que précédemment définie, caractérisé en ce qu'il consiste en les étapes suivantes :
- à ouvrir la porte de la structure,
- à placer les jambes en position intermédiaire et les navettes en position basse en appui contre la coque,
- à placer les bras de la paire de bras supérieurs en position active et à les verrouiller entre eux avec le logement en U de la platine ouvert,
- à déplacer la structure pour placer un ponton comportant au moins une éolienne ou hydrolienne entre les branches latérales de la coque,
- à engager le mât dans les logements en U de la plaque et de la platine,
- à fermer par le loquet le logement de la platine,
- à basculer simultanément les bras de la paire de bras inférieurs pour maintenir le mât à sa partie inférieure,
- à verrouiller chaque navette sur la jambe correspondante,
- à remonter les jambes pour soulever les navettes et les paires de bras pour amener la platine au contact du collier du mât,
- à soulever le mât du ponton par l'intermédiaire des navettes et des paires de bras en remontant les jambes,
- à retirer la structure portant au moins une éolienne pour la placer à l'écart du ponton,
- à redescendre les jambes pour reposer les navettes en position basse en appui contre la coque,
- à déverrouiller chaque navette sur la jambe correspondante,
- à remonter les jambes en position haute,
- à fermer la porte de la structure,
- à déplacer la structure portant ladite au moins éolienne ou hydrolienne jusqu'à un site d'installation sur un socle préalablement installé sur le fond marin,
- à descendre les jambes en positon basse ou intermédiaire,
- à verrouiller chaque navette sur la jambe correspondante,
- à remonter les jambes pour soulever le mât au moyen des navettes et des paires de bras,
- à déplacer la structure pour positionner le mât dans l'alignement du socle,
- à descendre par les jambes, les navettes et les paires de bras, pour engager le mât dans le socle,
- à basculer les bras de la paire de bras inférieurs en position escamotée, les mouvements horizontaux de la coque étant repris par les moyens de compensation de la paire de bras supérieurs,
- à descendre les jambes, les navettes et la paire de bras supérieurs pour poser le mât sur le socle,
- à ouvrir le logement en U de la platine,
- à déverrouiller les bras de la paire de bras supérieurs,
- à basculer les bras de ladite paire de bras supérieurs en position escamotée, et
- à retirer la structure.

L'invention sera mieux comprise à la lecture de la description qui va suivre, donnée uniquement à titre d'exemple et faite en se référant aux dessins annexés, sur lesquels :
- la Fig. 1 est une vue schématique en perspective d'une structure de transport et d'installation en mer d'au moins une éolienne, conforme à l'invention,
- la Fig. 2 est une vue schématique de face de la structure, conforme à l'invention,
- la Fig. 3 est une vue schématique en perspective de la structure avec les navettes en position haute,
- la Fig. 4 est une vue schématique en perspective d'une navette de la structure,
- la Fig. 5 est une vue partielle en coupe verticale des moyens mécaniques de déplacement d'une jambe de la structure,
- la Fig. 6 est une vue en coupe selon la ligne 6-6 de la Fig. 5,
- la Fig. 7 est une vue schématique en coupe verticale des moyens de verrouillage d'une navette sur une jambe de la structure, conforme à l'invention,
- la Fig. 8 est une vue de dessus de la paire de bras supérieurs et des moyens de compensation des déplacements horizontaux de la coque par rapport au mât de l'éolienne,
- la Fig. 9 est une vue en coupe selon la ligne 9-9 de la Fig. 8,
- les Figs. 10 et 11 sont deux vues schématiques de dessus de la structure et montrant les déplacements de cette structure par rapport au mât de l'éolienne placé dans son socle,
- les Figs. 12 à 15 sont des schémas montrant les différentes étapes de transport et d'installation d'une éolienne selon un premier exemple, et
- les Figs. 16 à 19 sont des schémas montrant les différentes étapes de transport de deux éoliennes selon un second exemple.

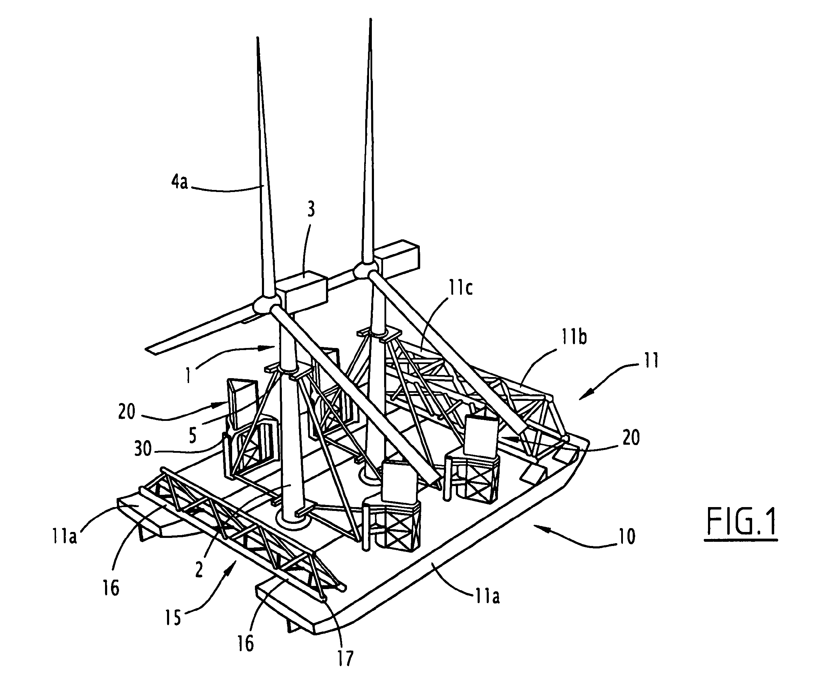

Sur les Figs. 1 à 3, on a représenté schématiquement une structure 10 destinée au transport et à l'installation d'au moins une éolienne et de préférence de deux éoliennes.

Cette structure 10 peut être également être utilisée pour le transport et l'installation d'au moins une hydrolienne et de préférence de deux hydroliennes.

Dans ce qui suit, on décrira le transport et l'installation d'une éolienne, le transport et l'installation de l'autre éolienne étant identique.

D'une manière générale, la structure 10 comprend une coque flottante 11 en forme de U comportant deux branches latérales 11a parallèles et opposées, reliées entre elles par une branche centrale 11 b.

Les deux branches latérales 11 a sont formées par deux flotteurs s'étendant parallèlement l'un par rapport à l'autre et ménageant entre eux un espace libre et la branche centrale 11 b est formée par une poutre transversale 11 c portée par lesdites branches latérales 11a.

De préférence, la poutre transversale 11 c formant la branche centrale est constituée par un treillis de tubes reliés entre eux par des éléments longitudinaux.

Les branches latérales 11a de la structure 10 sont déplaçables par coulissement l'une par rapport à l'autre sur la poutre transversale 11 c de façon à régler leur écartement, ainsi qu'on le verra ultérieurement.

Pour cela, le flotteur de chaque branche latérale 11a comporte des moyens 13 de déplacement sur la poutre transversale 11 c formés par exemple par un ensemble comportant des rails de guidage et un système de pignons-crémaillères, non représenté, et de type connu.

De plus, le flotteur de chaque branche latérale 11 a est équipé de moyens de verrouillage, non représentés, sur la poutre transversale 11c de façon à maintenir l'écartement entre ces deux branches latérales 11a constant et déterminé.

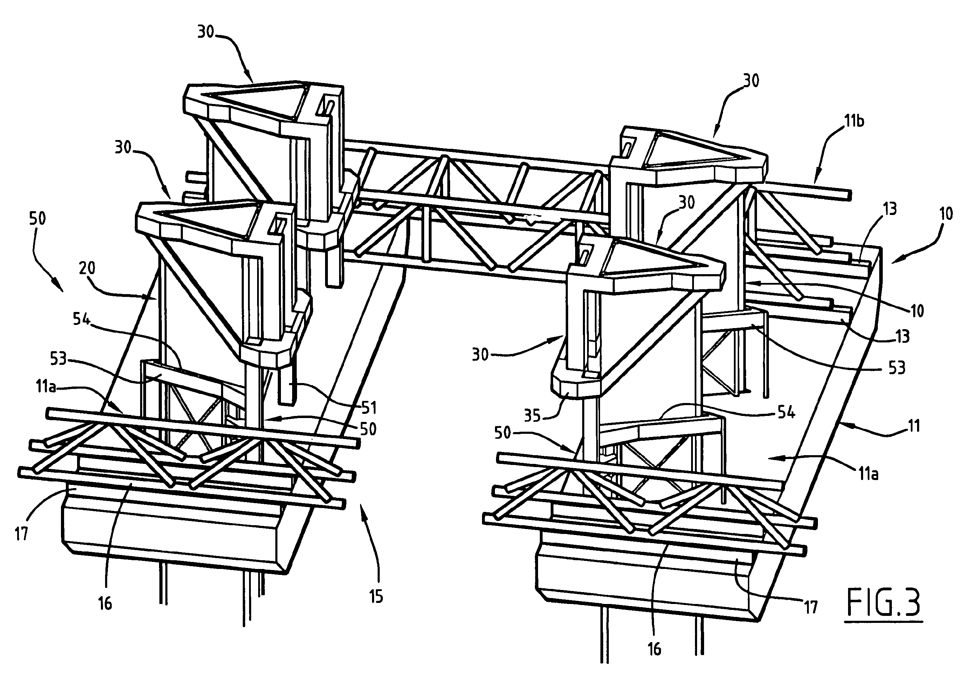

Ainsi que montré sur les Figs. 1 et 3, la coque 11 comporte au niveau de sa partie ouverte, c'est à dire à l'opposé de la branche centrale 11 b, une porte désignée dans son ensemble par la référence 15.

Cette porte 15 est formée de deux tronçons de poutre 16 opposés et déplaçables par coulissement chacune sur une branche latérale 11a.

Les deux tronçons de poutre 16 sont déplaçables entre une position écartées, comme représentée à la Fig. 3, dans laquelle ils libèrent l'entrée de la structure 10 pour le positionnement d'un navire, d'un quai ou d'une barge et une position fermée de cette entrée de la structure 10, comme montrée à la Fig. 1, dans laquelle ils sont rapprochés et en contact l'un avec l'autre.

Pour cela, chaque branche latérale 11 a de la coque 11 comporte des moyens 17 de déplacement de chaque tronçon de poutre 16. Ces moyens 17 sont constitués par exemple par un ensemble comportant des rails de guidage et un système pignons-crémaillères ou part tout autre moyen de type connu.

Enfin, chaque branche latérale 11 a comporte aussi des moyens de verrouillage, non représentés, du tronçon de poutre 16 correspondant dans la position fermée ou dans la position ouverte.

La coque 11 est équipée de jambes 20 déplaçables verticalement par rapport à cette coque 11 en flottabilité. Dans l'exemple de réalisation représenté sur les figures, la coque 11 est équipée de quatre jambes 20 disposées par paire sur chaque branche latérale 11 a de la coque 12.

Chacune des jambes 20 présente par exemple une section triangulaire ainsi que montrée sur les figures, ou une section carrée ou circulaire.

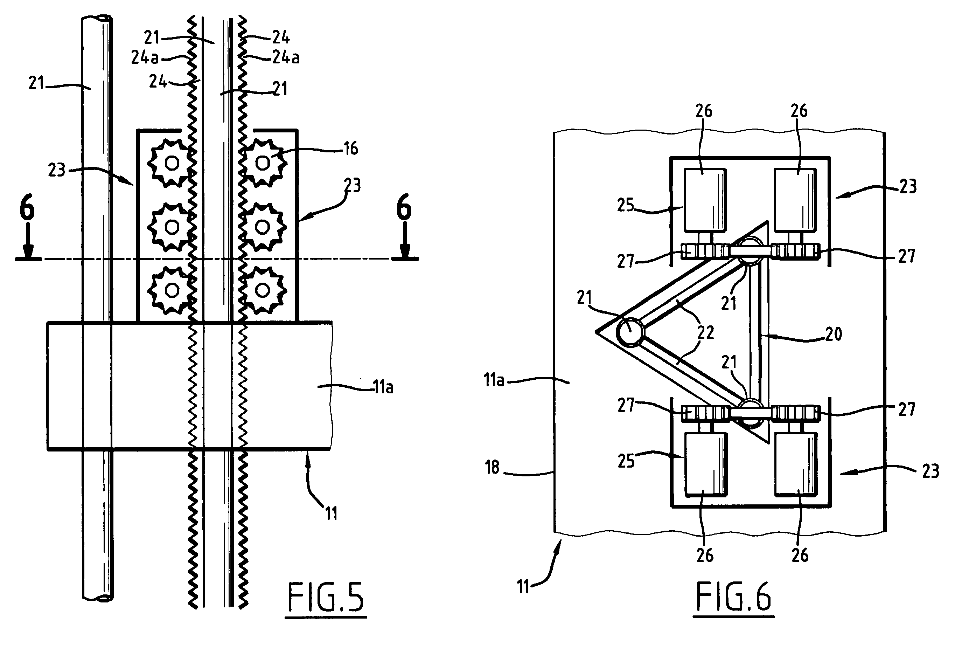

Comme cela apparaît notamment sur les figures 5 et 6, chaque jambe 20 est formée, de manière classique, de trois membrures 21 reliées entre elles par un treillis de poutrelles métalliques 22 ou par des jambes pleines. Chaque jambe 20 est associée à des moyens mécaniques de déplacement désignés par la référence générale 23.

Les moyens mécaniques de déplacement 23 sont logés dans une ossature porteuse 18, également appelée "jack-house", qui est supportée par la coque 11.

Comme montré sur les Figs. 5 et 6, les moyens mécaniques de déplacement 23 de chaque jambe 20 comprennent, d'une part, deux plaques opposées 24 portées chacune par une membrure 21 de la jambe 20 correspondante et comportant, chacune sur chaque face latérale, une série de dents 24a formant sur les deux membrures 21, une crémaillère double.

Les moyens mécaniques de déplacement 23 comprennent également plusieurs ensembles 25 répartis de part et d'autre de chaque plaque 24, suivant la hauteur de celle-ci. Chaque ensemble 25 comprend un motoréducteur 26 assurant l'entraînement d'un pignon 27 qui engrène avec une série de dents 24a de la plaque 24 correspondante.

Dans le mode de réalisation représenté sur les Figs. 5 et 6, les deux séries de dents 24a de chaque plaque 24 sont associées à six pignons 27 entraînés chacun en rotation par un groupe motoréducteur 26.

La structure 10 comporte également, associée à chacune des jambes 20, une navette désignée par la référence générale 30 qui est déplaçable par la jambe 20 correspondante entre une position basse en appui sur la coque 11 en flottabilité, ainsi que montrée à la Fig. 1, et une position haute ainsi que représentée à la Fig. 3.

Les navettes 30 associées aux jambes 20 sont déplacées simultanément par les jambes 20.

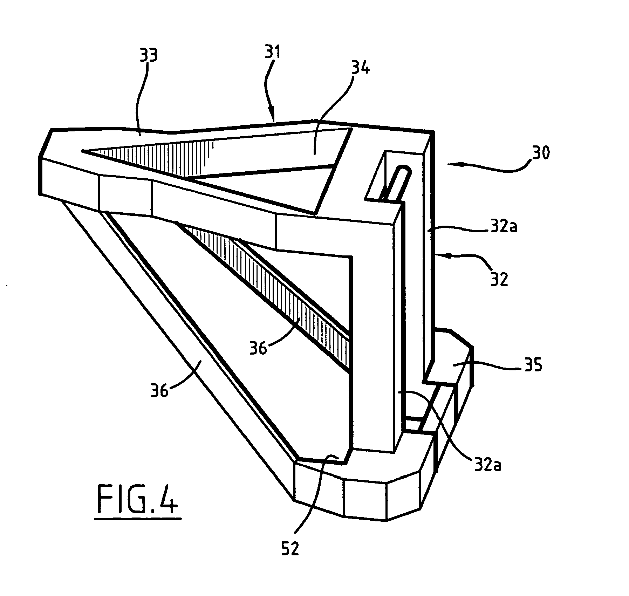

Dans l'exemple de réalisation représenté à la Fig. 4, chaque navette 30 est formée par un corps 31 comportant une branche verticale 32 s'étendant sensiblement parallèlement aux membrures 21 de la jambe correspondante.

La branche verticale 32 est formée de deux poutres 32a verticales et parallèles.

La branche 32 est munie, d'une part, à sa partie supérieure d'une plaque 33 s'étendant sensiblement perpendiculairement à ladite branche 32 et, d'autre part, à sa partie inférieure, d'une semelle 35 horizontale de support d'une paire de bras supérieur et inférieur désigné dans son ensemble par la référence 60 et 70 (Fig. 1), et qui seront décrits ultérieurement.

La plaque 33 comporte une ouverture 34 présentant une section de forme complémentaire à la section transversale de la jambe 20 correspondante et, dans le cas présent, une section triangulaire. La plaque 33 est reliée à la semelle 35 par des poutrelles de rigidification 36.

Chaque navette 30 est munie de moyens 40 de verrouillage sur la jambe 12 correspondante et/ou d'un ensemble de petites poutres (non représentées) situées sur la partie supérieure de la navette 30 qui sont déplacées par coulissement vers l'intérieur de la navette 30 et de la jambe 20 ce qui permet en remontant vers le haut de la jambe 20 d'entraîner la navette 30 correspondante.

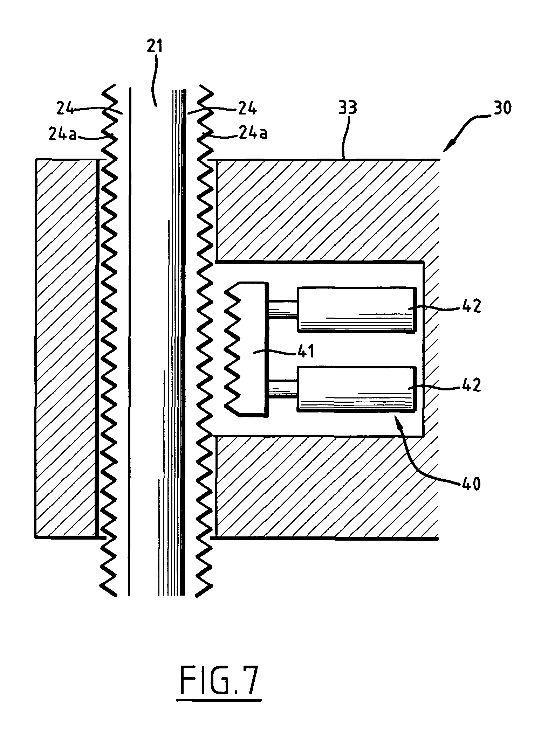

Ces moyens 40 de verrouillage représentés plus en détails sur la Fig. 7, sont formés par au moins une contre-crémaillère 41 et, de préférence, par au moins une contre-crémaillère 41 pour chaque plaque 24.

La contre-crémaillère 41 est déplaçable par au moins un organe d'actionnement 42 et, de préférence, par deux organes d'actionnement 42 constitués par exemple par des vérins hydrauliques ou pneumatiques afin de déplacer la contre-crémaillère 41 entre une position escamotée et une position de blocage en prise sur l'une des séries de dents 24a de la jambe 20 correspondante.

L'ensemble constitué par la contre-crémaillère 41 et les organes d'actionnement 42 sont portés par la plaque 33 de chaque navette 30.

La coque 11 comporte aussi au niveau de chaque jambe 20, des moyens 50 de guidage de la navette 30 correspondante entre les positions respectivement basses (Fig. 1) et haute (Fig. 3).

Comme montré sur ces Figs. 1 et 3, les moyens 50, de guidage de la navette 30 de chaque jambe 20 comprennent deux colonnes 51 verticales s'étendant sensiblement parallèlement à la jambe 20 correspondante. Chaque colonne 51 coopère avec un passage 52 ménagé dans la semelle 35 de la navette 30 et chacun de ces passages 52 présente une section de forme conjuguée à la section de la colonne 51 correspondante. Les deux colonnes 51 sont reliées entre elles par une plaque de liaison 53 s'étendant sensiblement perpendiculairement auxdites colonnes 51 qui comportent un passage central 54 (Fig. 4) présentant une section de forme complémentaire à la section transversale de la jambe 20 correspondante et, dans le cas présent, une section triangulaire. La plaque de liaison 53 forme un guidage pour la jambe 20 correspondante.

Au cours du déplacement de la navette 30 entre la positon basse et la position haute, par la jambe 20, la semelle 35 de la navette 30 est guidée par les colonnes 51 et dans la position basse représentée à la Fig. 1, la plaque 31 de la navette 30 est en appui sur l'extrémité supérieure de chaque colonne 51.

D'une manière générale, la structure de transport 10 comporte au moins un ensemble de support d'une éolienne 1 et de préférence, comme montré sur les figures, deux ensembles de support chacun d'une éolienne 1.

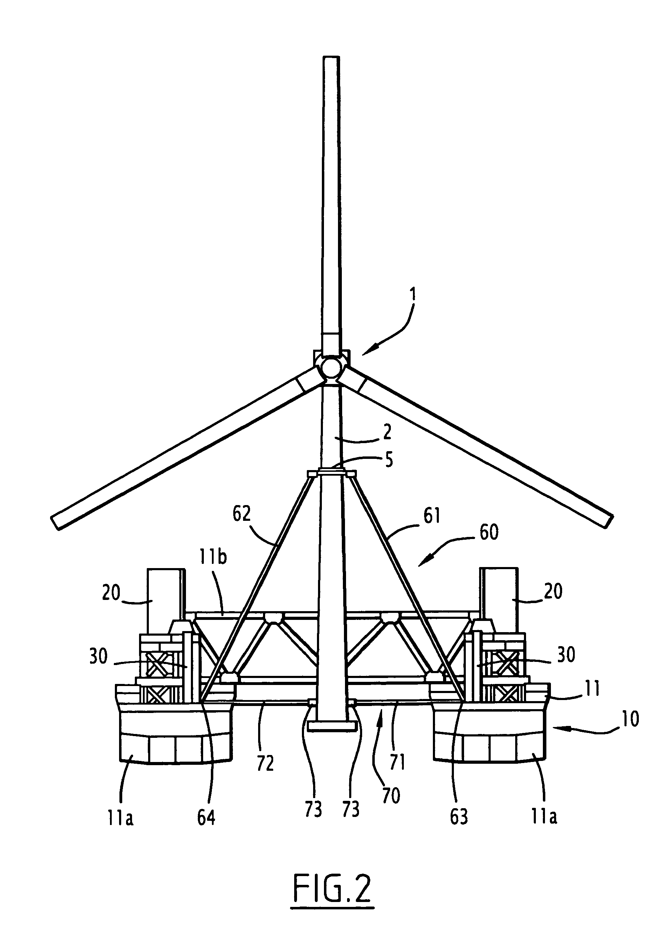

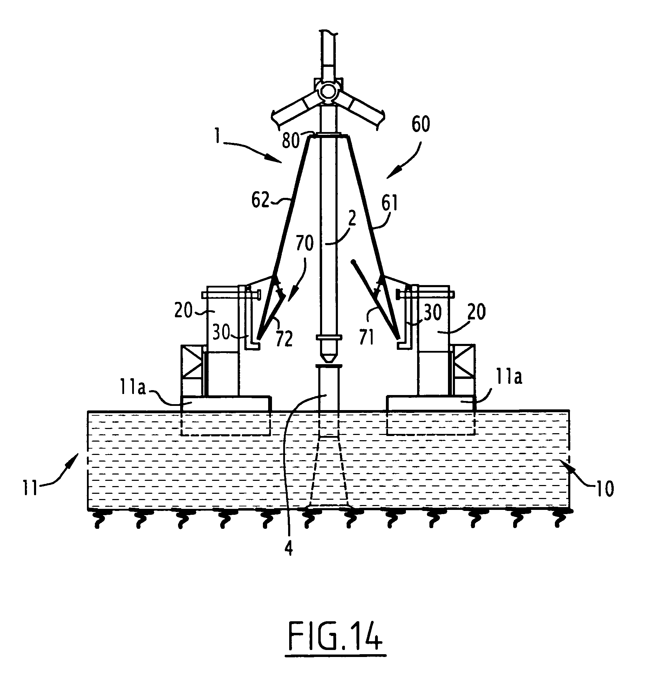

Ainsi que montré sur les Figs. 1 et 2, l'éolienne 1 se compose d'un mât 2 portant une nacelle 3 renfermant des moyens de production d'électricité, non représentés, entraînés pas des pales 4a. Le mât 2 est destiné à être emmanché dans un socle 4, comme représenté par exemple la Fig. 14, préalablement ancré sur le fond marin.

Ainsi que montré sur les Figs. 1 et 2, le mât 2 comporte, dans sa partie supérieure, un collier 5.

En se reportant maintenant aux Figs. 1 et 2, on va décrire un ensemble de support d'une éolienne 1, l'autre ensemble de support de l'autre éolienne 1 étant identique.

L'ensemble de support de l'éolienne 1 est composé de deux navettes 30 opposées et associées chacune à une jambe 20.

Les navettes 30 portent une paire de bras supérieurs 60 et une paire de bras inférieurs 70.

La paire de bras supérieurs 60 comporte un premier bras 61 porté par une première navette 30 et un second bras 62 opposé porté par une seconde navette 30 opposée à la première navette 30 et la paire de bras inférieurs 70 comporte un premier bras 71 porté par la première navette 30 et un second bras 72 opposé porté par la seconde navette 30. Les bras 61 et 71 sont déplaçables par pivotement autour d'un axe horizontal 63 porté par la première navette 30 et les bras 62 et 72 sont déplaçables par pivotement autour d'un axe horizontal 64 porté par la seconde navette 30 entre une position escamotée sensiblement verticale et une position active basculée contre le mât de l'éolienne, comme montré par exemple sur les Figs. 1 et 2.

Les bras 61 et 62 de la paire 60 de bras supérieurs présentent chacun une longueur sensiblement égale à la hauteur du mât 2 de l'éolienne 1 et les bras 71 et 72 de la paire 70 de bras inférieurs présente une longueur sensiblement égale à la moitié de la distance séparant les bords internes des deux branches latérales 11a de la coque 11.

En variante,les bras 61 et 62 présentent une longueur variable et réglable en fonction de la hauteur du collier 5 sur le mât 2 de l'éolienne. Les bras sont par exemple télescopiques et munis de moyens d'immobilisation dans une longueur donnée.

Les extrémités libres 71 et 72 de la paire 70 de bras inférieurs comportent un ensemble de serrage constitué par exemple par des mâchoires 73 ou par tout autre organe approprié de serrage de type connu.

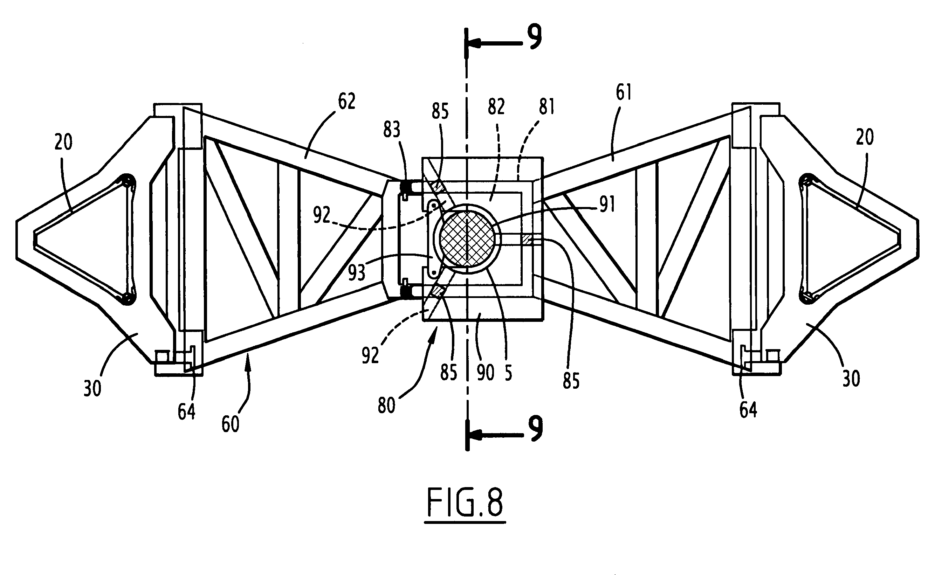

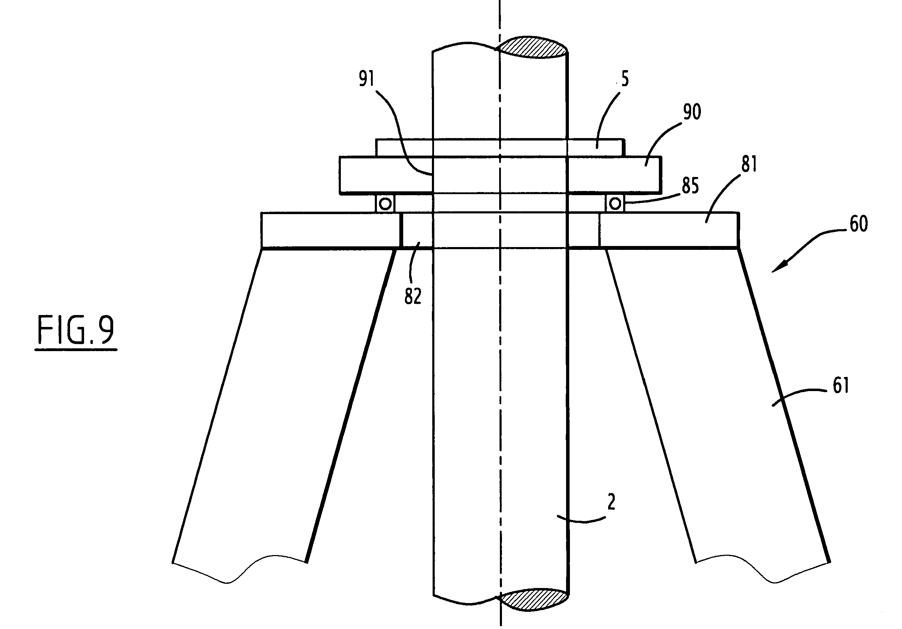

Ainsi que montré sur les Figs. 8 et 9, les bras 61 et 62 de la paire 60 de bras supérieurs comportent des moyens 80 de compensation des déplacements horizontaux de la coque 11 par rapport au mât 2 après son introduction dans le socle 4 et le basculement de la paire 70 des bras inférieurs en position escamotée, comme cela sera décrit ultérieurement.

Comme montré sur ces figures, les moyens 80 de compensation comportent un ensemble de support du mât 2 par l'intermédiaire du collier 5. Cet ensemble de support comporte des moyens de coulissement formés par une plaque 81 munie d'un logement en U 82 et fixée à l'extrémité libre d'un des bras de la paire 60 de bras supérieurs et notamment à l'extrémité libre du bras 61 de ladite paire 60 de bras supérieurs. Cette plaque 81 est destinée à coopérer avec un système de verrouillage 83, de type connu, monté à l'extrémité libre du bras 62 de la paire 60 de bras supérieurs dans la position active basculée contre le mât 2 de l'éolienne 1, ainsi que montré à la Fig. 8. Cette plaque 81 en forme de U est formée par un rail destiné à recevoir des organes de roulement 85.

Le logement en U 82 de la plaque 81 présente une largeur supérieure au diamètre du mât.

Les moyens de coulissement de l'ensemble de support du mât 2 comprennent également une platine 90 munie d'un logement en U 91 présentant une largeur sensiblement égale au diamètre du mât 2. Cette platine 90 est déplaçable sur la plaque 81 par les organes de roulement 85 selon un plan horizontal sensiblement parallèle à l'ensemble de support du mât. Pour cela, la face inférieure de la platine 90 comporte trois rails 92 formant entre eux un angle de 120°.

La platine 90 comporte un loquet 93 de fermeture du logement en U 91 et qui est déplaçable entre une position ouverte permettant le positionnement du mât 2 à l'intérieur du logement 91 de platine 90, ainsi qu'à l'intérieur du logement 82 de la plaque 81 et une position de fermeture du logement 91, comme montrée à la Fig. 8.

Ainsi, les moyens de coulissement de l'ensemble de support formés par la plaque 81, la platine 90 et les organes de roulement 85 compensent les déplacements horizontaux de la coque 11 par rapport au mât 2 lorsque ce dernier est introduit dans le socle 4, et après le basculement de la paire 70 de bras inférieurs en position escamotée afin de libérer la partie inférieure du mât 2 par rapport à la coque 11.

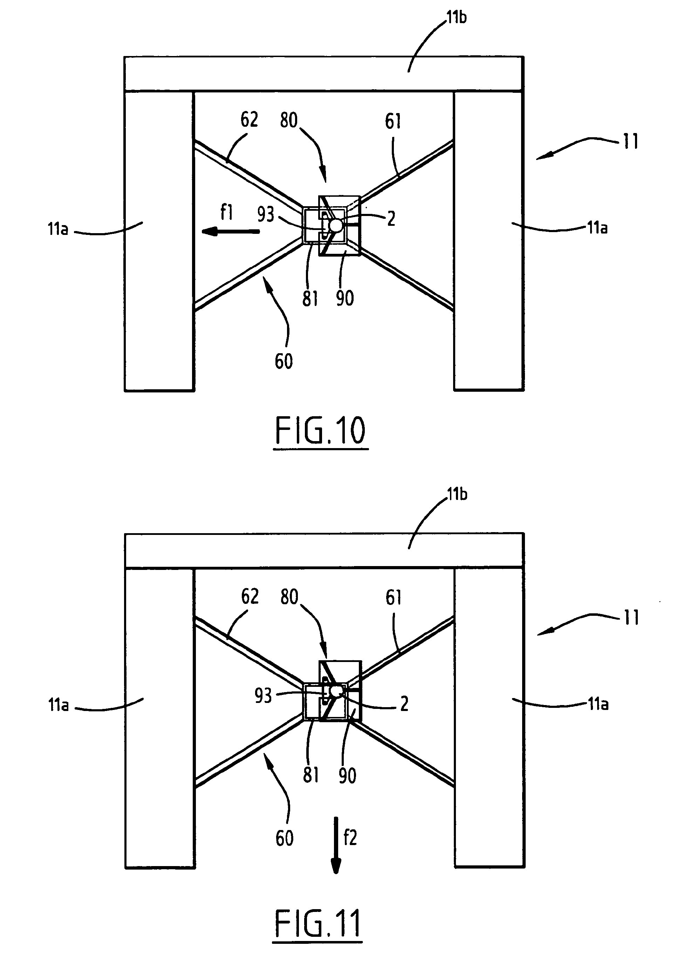

A titre d'exemple et comme montré sur les Figs. 10 et 11, ces moyens de coulissement permettent le déplacement horizontal de la coque 11 dans une direction f1 sans que le mât 2 bouge, ainsi que montré à la Fig. 10 ou un déplacement horizontal de la coque 11 selon une direction f2 sans que le mât 2 de l'éolienne 1 bouge.

Ces moyens de coulissement évitent donc toute transmission d'efforts ou de contraintes dans le socle 4, et tout flambement du mât 2, après la pose du mât 2 de l'éolienne 1 dans ce socle 4.

Selon la manière dont la ou les éoliennes sont posées sur la structure 10, les logements en U 82 et 91 respectivement de la plaque 81 et de la platine 90 sont dirigés perpendiculairement à l'axe longitudinal de la coque 11 ou sont dirigés dans l'axe longitudinal de cette coque 11 en direction de la partie ouverte de ladite coque 11.

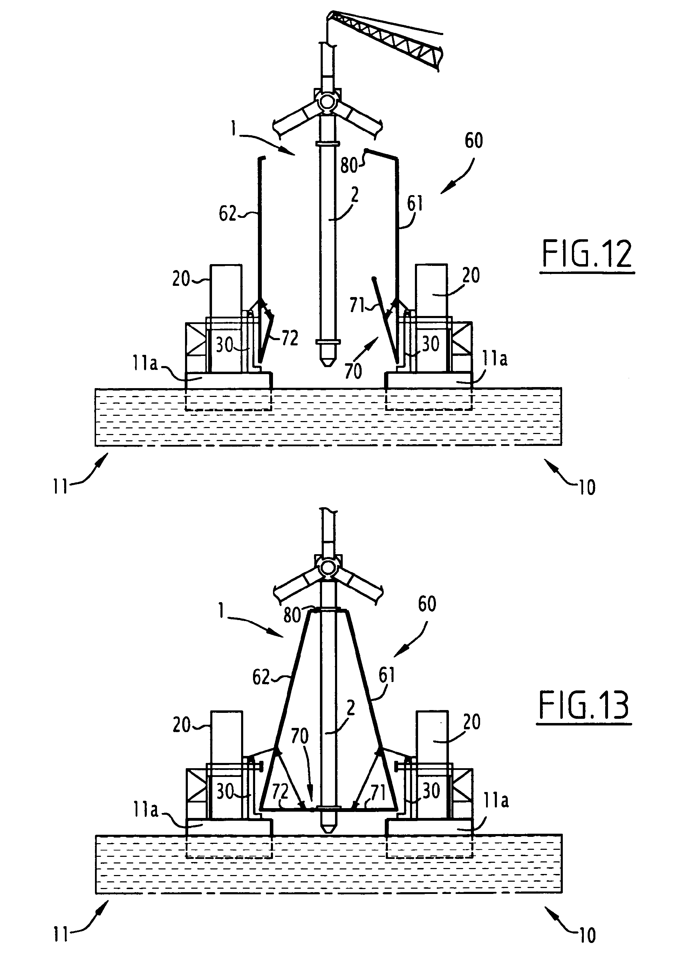

En se reportant maintenant aux Figs. 12 à 15, on va décrire un premier procédé de transport et d'installation d'au moins une éolienne 1.

Tout d'abord, la structure 10 est positionnée à proximité d'une zone de chargement de l'éolienne 1 avec les jambes 20 en position haute et les navettes 30 en position basse en appui contre la coque et avec les bras 61 et 62 et les bras 71 et 72, respectivement de la paire 60 de bras supérieurs et de la paire 70 de bras inférieurs, en position escamotée sensiblement verticale, comme montrée à la Fig. 12.

L'éolienne 1 est soulevée par un engin de levage, comme par exemple une grue, et le mât 2 de cette éolienne est placé entre les deux branches latérales 11a de la coque 11, comme montré à la Fig. 12.

Le bras 61 comportant les logements en U 82 et 91 de la plaque 81 et de la platine 90 est basculé en position active pour placer le mât 2 dans ces logements en U 82 et 91 au-dessous du collier 5 dudit mât 2. Le bras 62 de la paire 60 de bras supérieurs est ensuite basculé en position active et les bras 61 et 62 sont solidarisés entre eux par le système de verrouillage 83. (Fig. 13). Le logement en U 91 de la platine 90 est fermé par le loquet 93.

Le mât 2 est descendu par la grue pour amener le collier 5 en appui sur la platine 90, ainsi que montré à la Fig. 13, et les bras 71 et 72 de la paire 70 de bras inférieurs sont basculés simultanément en position active pour maintenir le mât 2 à sa partie inférieure.

La pose d'une seconde éolienne sur la structure 10 s'effectue d'une manière analogue.

La platine 90 est verrouillée pendant le transport à la plaque 81

La structure 10 portant la ou les deux éoliennes 1 est déplacée jusqu'à un site d'installation sur lequel un ou deux socles 4, ont été préalablement installés sur le fond marin.

La pose du mât 2 de chaque éolienne 1 sur son socle 4, correspondant est réalisée de la manière suivante.

Les jambes 20 sont abaissées et chaque navette 30 est verrouillée sur la jambe 20 correspondante.

Ces jambes 20 sont remontées pour soulever le mât 2 au moyen des navettes 30 et des paires 60 et 70 de bras supérieurs et inférieurs, ainsi que montré à la Fig. 14. La porte 15 formée des tronçons 16 est ouverte. La structure 10 est déplacée afin de positionner le mât 2 dans l'alignement du socle 4 et les bras 71 et 72 de la paire 70 de bras inférieurs est basculée en position escamotée, ainsi que représenté à la Fig. 14. La platine 90 est déverrouillée de la plaque 81.

Ensuite, les jambes 20, les navettes 30 et la paire 60 de bras supérieurs sont descendues pour engager progressivement le mât 2 dans le socle 4, Au cours de cet engagement, les mouvements horizontaux de la coque 10 sont repris par les moyens 80 de compensation prévus sur la paire 60 de bras supérieurs de telle sorte que le mât 2 reste toujours en position sensiblement verticale.

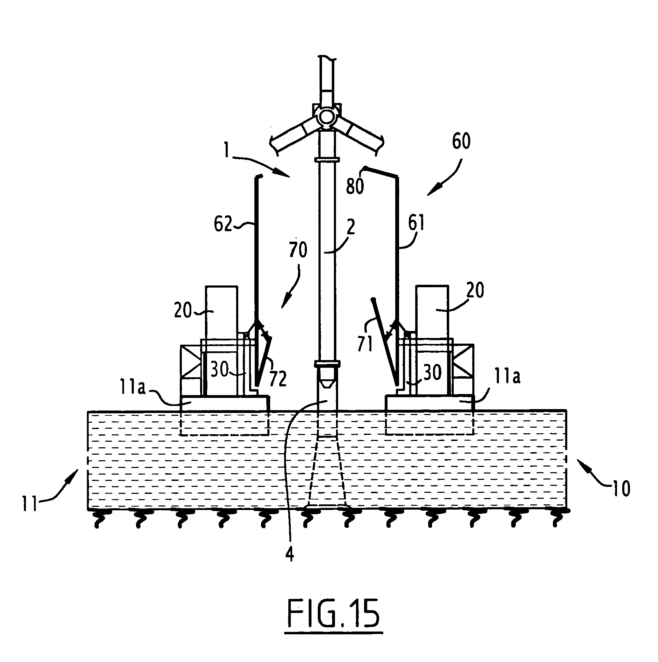

Le mât 2 est posé dans le socle 4, et les bras 60 et 61 de la paire 60 de bras supérieurs sont déverrouillés et le loquet 93 de la platine 90 est libéré pour ouvrir le logement en U 91. Les bras 60 et 61 sont basculés en position escamotée, ainsi que représenté à la Fig. 15.

La structure 10 est ensuite retirée et la pose d'un autre mât 2 sur le socle 4 d'une seconde éolienne est réalisée de manière identique.

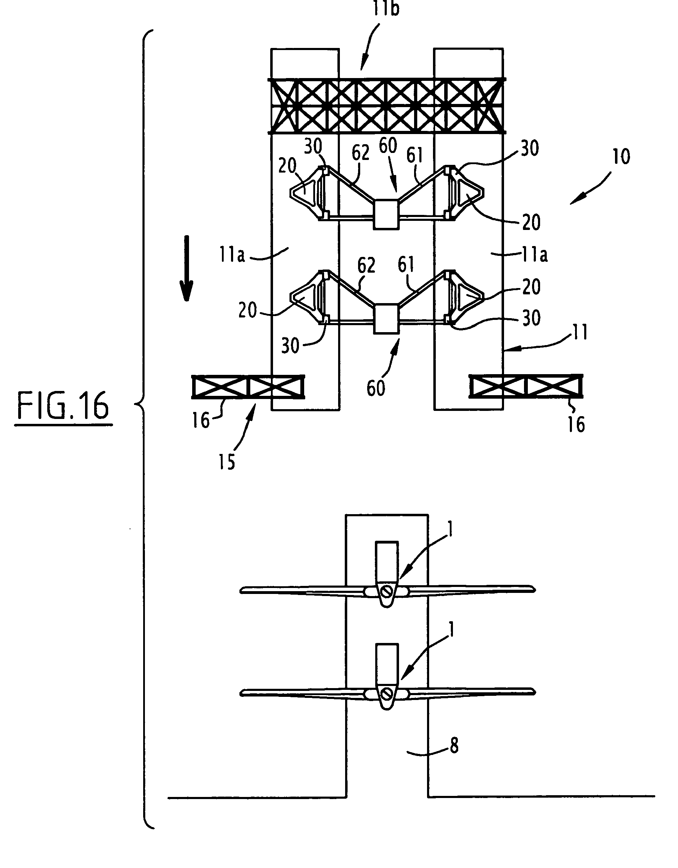

En se reportant maintenant aux Figs. 16 à 19, on va décrire un autre procédé de transport et d'installation en mer d'une ou de deux éoliennes dans le cas ou cette ou ces éoliennes sont en attente sur un ponton 8.

Ainsi que montré à la Fig. 16, la porte 15 de la coque 11 est ouverte et les jambes 20 sont placées en position intermédiaire, tandis que les navettes 30 sont placées en position basse en appui contre la coque 11.

Dans ce cas, les logements en U 82 et 91 de la plaque 81 et de la platine 90 sont dirigés dans l'axe longitudinal de la coque 11 en direction de la partie ouverte de cette coque 11. Les bras 71 et 72 de la paire 70 de bras inférieurs sont en position escamotée sensiblement verticale.

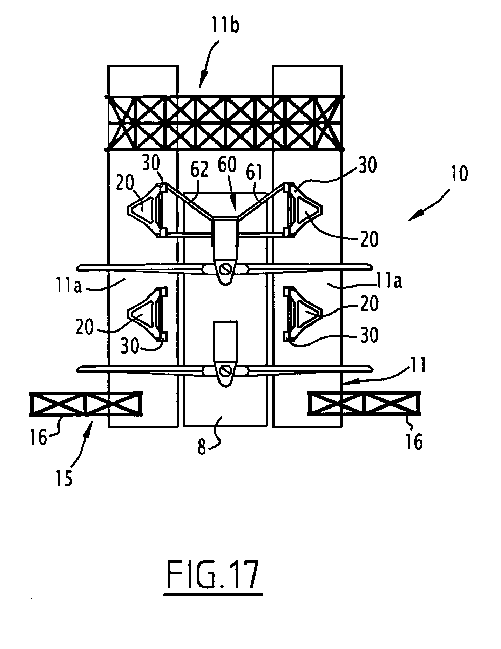

Les bras 61 et 62 de la paire 60 de bras supérieurs disposés à l'avant de la coque 11 sont placés en positon escamotée sensiblement verticale et les bras 61 et 62 de la paire 60 de bras supérieurs situés à l'arrière de la coque 11 sont placés en position active et verrouillés entre eux ainsi que montré à la Fig. 17. Le logement en U 91 de la platine 90 est ouvert.

La structure 10 est déplacée en direction du ponton 8 pour placer ce ponton 8 entre les branches latérales 11 a de la coque 11.

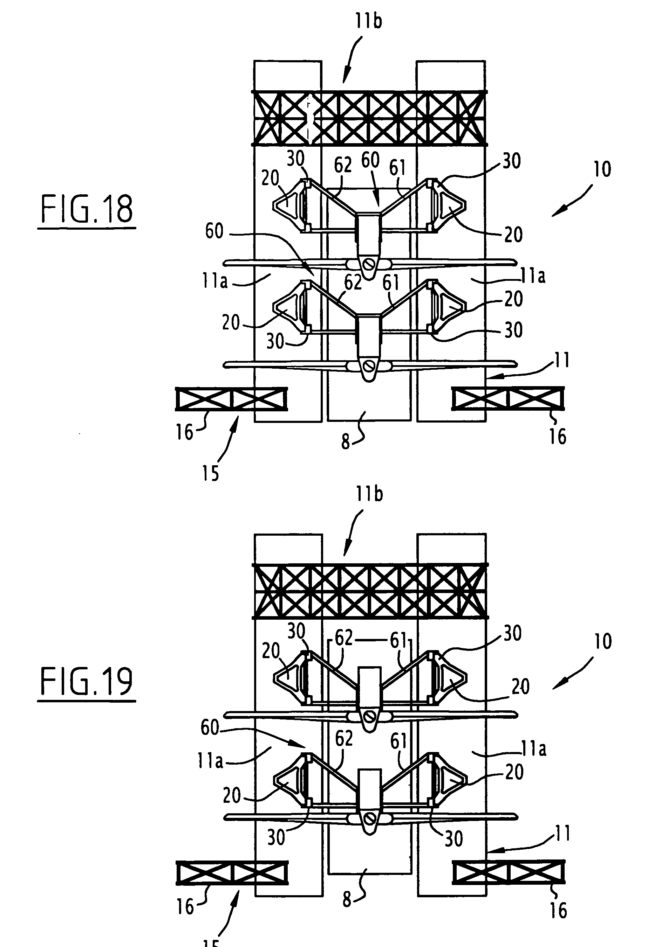

Après le passage de la première éolienne 1 au-delà du premier ensemble de support, comme montré à la Fig. 17, les bras 61 et 62 de la paire 60 de bras supérieurs de ce premier ensemble sont basculés en position active, comme montrée à la Fig. 18 et la structure 10 est déplacée pour engager le mât 2 de chaque éolienne dans les logements en U 82 et 91 respectivement de la plaque 81 et de la platine 90, ainsi que montré à la Fig. 19.

Le loquet 93 du logement en U 91 de chaque platine 90 est fermé et les bras 71 et 72 de la paire 70 de bras inférieurs de chaque ensemble sont basculés simultanément pour serrer chaque mât 2 à sa partie inférieure.

Chaque navette 30 est verrouillée sur la jambe 20 correspondante et ces jambes 20 sont remontées pour soulever les navettes 30 et les paires 60 et 70 de bras supérieurs et inférieurs sont soulevées par les navettes 30 pour amener la platine 90 de chaque ensemble au contact du collier 5 du mât 2 correspondant.

Le mât 2 de chaque éolienne 1 est soulevé du ponton 8 par l'intermédiaire des navettes 30 et des paires 60 de bras supérieurs en remontant les jambes 20, les paires 70 de bras inférieurs maintenant chaque mât 2 à sa partie inférieure.

Les jambes 20 sont ensuite redescendues pour reposer les navettes en position basse en appui contre la coque.

On déverrouille alors chaque navette 30 de chaque jambe 20 correspondante et on remonte les jambes 20 en position haute, pour limiter le tirant d'eau au minimum.

Ensuite, la structure 10 portant les éoliennes 1 est déplacée jusqu'à un site d'installation de chaque éolienne 1 sur son socle 4, préalablement installé sur le fond marin.

L'installation de chaque éolienne 1 est réalisée de la façon suivante.

Les jambes 20 sont remontées pour soulever le mât 2 au moyen des navettes 30 et des paires 60 et 70 de bras et la structure 10 est déplacée pour positionner le mât 2 dans l'alignement du socle 4. Les bras 71 et 72 de la paire 70 de bras inférieurs sont basculés en position escamotée et les mêmes étapes que le précédent procédé sont réalisées.

Dans ce cas également, au moment de l'engagement du mât 2 dans le socle 4, correspondant et après le basculement de la paire 70 de bras inférieurs, les mouvements horizontaux de la coque sont repris par les moyens 80 de compensation de la paire 60 de bras supérieurs de telle sorte que le mât 2 reste toujours en positon sensiblement verticale.

Selon un autre procédé de pose d'une ou de deux éoliennes sur la coque 11 de la structure 10, cette ou ces éoliennes peuvent être montées sur des chariots se déplaçant sur des rails. Pour cela, chaque chariot est équipé des paires 60 et 70 de bras supérieurs et inférieurs afin de maintenir l'éolienne en position sensiblement verticale. La ou les éoliennes sont positionnées sur la structure 10 en déplaçant le ou les chariots par roulement sur les rails entre le ponton et la structure 10 pour positionner les paires de bras portant l'éolienne sur les navettes correspondantes.

Pour le transport et l'installation d'une hydrolienne, les mêmes étapes sont réalisées. Mais, dans ce cas, le socle ne dépasse pas de la surface de l'eau et, après la pose du mât sur son socle, la nacelle renfermant les moyens de production d'électricité et portant les pales est descendue au-dessous de la surface de l'eau par coulissement sur son mât. Pour cette application les bras de la paire de bras supérieurs présentent une longueur inférieure à celle prévue pour l'installation d'une éolienne.

La structure de pose et d'installation d'au moins une éolienne ou d'au moins une hydrolienne représente l'avantage d'éviter que des efforts ou des contraintes se répercutent sur le socle du fait des déplacements de la coque engendrés par la houle.

L'invention ne se limite pas à l'installation d'éoliennes portées par un socle 4 posé sur le fond de l'étendue d'eau. En variante, le socle 4 est flottant à la surface de l'eau et est ancré sur le fond de l'étendue d'eau.

## Revendications

1. Structure (10) de transport et d'installation en mer d'au moins une éolienne ou hydrolienne comprenant une nacelle (3) et des pâles (4a) portées par un mât (2) destiné à être monté sur un socle (4) ancré sur le fond marin, **caractérisée en ce que** la structure (10) comporte :
- une coque (11) flottante en forme de U munie de deux branches latérales (11a) opposées et parallèles, portant chacune au moins une jambe (20) déplaçable verticalement par rapport à la coque (11) en flottaison au moyen de mécanismes de déplacement (25, 26, 27), et
- au moins un ensemble de support d'une éolienne ou d'une hydrolienne, composé de deux navettes (30) opposées et associées chacune à une jambe (20) et portant chacune deux paires (60, 70) de bras, respectivement supérieurs et inférieurs, déplaçables par pivotement autour d'un axe horizontal (64) entre une position escamotée et une position active basculée contre le mât (2) de l'éolienne ou de l'hydrolienne, les bras (61, 62) de la paire (60) de bras supérieurs comportant des moyens (80) de compensation des déplacements horizontaux de la coque (11) par rapport au mât (2) après son introduction dans le socle (4) et le basculement de la paire (70) de bras inférieurs en position escamotée.

2. Structure (10) selon la revendication 1, **caractérisée en ce qu'**elle comporte deux ensembles symétriques de support chacun d'un mât (2) d'une éolienne ou d'une hydrolienne.

3. Structure (10) selon la revendication 1 ou 2, **caractérisée en ce que** chaque navette (30) comporte des moyens (40) de verrouillage sur la jambe (20) correspondante.

4. Structure selon l'une quelconque des revendications 1 à 3, **caractérisée en ce que** chaque bras (61, 62) de la paire (60) de bras supérieurs présente une longueur sensiblement égale à la hauteur du mât (2).

5. Structure selon la revendication 4, **caractérisée en ce que** chaque bras (61, 62) de la paire (60) de bras supérieurs est muni de moyens de réglage de la longueur du bras (61, 62).

6. Structure (10) selon l'une quelconque des revendications 1 à 5, **caractérisée en ce que** chaque bras (71, 72) de la paire (70) de bras inférieurs présentent une longueur sensiblement égale à la moitié de la distance séparant les bords intérieurs des deux branches latérales (11a) de la coque (11).

7. Structure (10) selon l'une quelconque des revendications 1 à 6, **caractérisée en ce que** les extrémités libres des bras (71, 72) de la paire (70) de bras inférieurs comportent un ensemble (73) de serrage du mât (2).

8. Structure (10) selon l'une quelconque des revendications 1 à 7, **caractérisée en ce que** les moyens (80) de compensation montés aux extrémités libres des bras (61, 62) de la paire (60) de bras supérieurs comportent un ensemble de support du mât (2) par l'intermédiaire d'un collier (5) ménagé sur ledit mât (2) et des moyens (81, 85, 90, 92) de coulissement pour le déplacement horizontaux de la coque (11) par rapport au mât (2) après son introduction dans le socle (4) et le basculement de la paire (70) de bras inférieurs en position escamotée.

9. Structure (10) selon la revendication 8, **caractérisée en ce que** les moyens de coulissement de l'ensemble de support comprennent, d'une part, une plaque (81) munie d'un logement en U (82), fixée à l'extrémité libre d'un (61) des bras (61, 62) de la paire (60) de bras supérieurs et destinée à coopérer avec un système de verrouillage (83) monté à l'extrémité libre de l'autre bras (62) de la paire (60) de bras supérieurs et, d'autre part, une platine (90) munie d'un logement en U (91) et déplaçable par des organes de roulement (85) sur la plaque (81) selon un plan parallèle à l'ensemble de support du mât.

10. Structure (10) selon la revendication 9, **caractérisée en ce que** les directions de déplacement de la platine (90) sur la plaque (81) forment entre elles un angle de 120°.

11. Structure (10) selon la revendication 9 ou 10, **caractérisée en ce que** la platine (90) comporte un loquet (93) de fermeture du logement en U (91).

12. Structure (10) selon l'une quelconque des revendications 9 à 11, **caractérisée en ce que** les logements en U (82, 91) respectivement de la plaque (81) et de la platine (90) sont dirigés perpendiculairement à l'axe longitudinal de la coque (11).

13. Structure selon l'une quelconque des revendications 9 à 11, **caractérisée en ce que** les logements en U (82, 91) respectivement de la plaque (81) et de la platine (90) sont dirigés dans l'axe longitudinal de la coque (11) en direction de la partie ouverte de ladite coque (11).

14. Procédé de transport et d'installation en mer d'au moins une éolienne ou hydrolienne au moyen d'une structure (10) selon l'une quelconque des revendications précédentes, **caractérisé en ce qu'**il consiste en les étapes suivantes :
- à positionner la structure (10) à proximité d'une zone de chargement de l'éolienne ou de l'hydrolienne,
- à placer les jambes (20) en position haute et les navettes (30) en position basse en appui contre la coque (11) avec les bras des deux paires (60, 70) de bras dans la position escamotée,
- à soulever l'éolienne ou l'hydrolienne et à placer le mât (2) de ladite éolienne ou hydrolienne entre les deux branches latérales (11a) de la coque (11),
- à basculer en position active le bras (61) comportant les logements en U (82, 91) de la paire (60) de bras supérieurs pour placer le mât (2) dans les logements en U (82, 91) au-dessous du collier (5),
- à basculer en position active l'autre bras (62) de la paire (60) de bras supérieurs et à verrouiller les bras (61, 62) entre eux,
- à fermer le logement en U (91) de la platine (90) par le loquet (93),
- à descendre le mât (2) pour amener le collier (5) en appui sur la platine (90),
- à basculer simultanément en position active les bras (71, 72) de la paire (70) de bras inférieurs pour maintenir le mât (2) à sa partie inférieure,
- à verrouiller la platine aux bras,
- à déplacer la structure (10) portant ladite au moins éolienne ou hydrolienne jusqu'à un site d'installation sur un socle (4) préalablement installé sur le fond marin,
- à abaisser les jambes (20) et à verrouiller chaque navette (30) sur la jambe (20) correspondante,
- à remonter les jambes (20) pour soulever le mât (2) au moyen des navettes (30) et des paires (60, 70) de bras,
- à déplacer la structure (10) pour positionner le mât (2) dans l'alignement du socle (4),
- à descendre par les jambes (20), les navettes (30) et la paire (60) de bras supérieurs pour engager le mât dans le socle (4),
- à déverrouiller la platine des bras,
- à basculer les bras (71, 72) de la paire (70) de bras inférieurs en position escamotée, les mouvements horizontaux de la coque (11) étant repris par les moyens (80) de compensation de la paire (60) de bras supérieurs,
- à descendre par les jambes (20), les navettes (30) et la paire (60) de bras supérieurs pour poser le mât (2) sur le socle (4),
- à ouvrir le logement en U de la platine,
- à déverrouiller les bras (61, 62) de la paire (60) de bras supérieurs,
- à basculer les bras (61, 62) de la paire (60) de bras supérieurs en position escamotée, et
- à retirer la structure (10).

15. Procédé de transport et d'installation en mer d'au moins une éolienne ou hydrolienne au moyen d'une structure (10) selon l'une quelconque des revendications 1 à 13, **caractérisé en ce qu'**il consiste en les étapes suivantes :
- à ouvrir la porte (15) de la coque (11),
- à placer les jambes (20) en position intermédiaire et les navettes (30) en position basse en appui contre la coque (11),
- à placer les bras (61, 62) de la paire (60) de bras supérieurs en position active et à les verrouiller entre eux avec le logement en U (91) de la platine (90) ouvert,
- à déplacer la structure (10) pour placer un ponton (8) comportant au moins une éolienne ou hydrolienne entre les branches latérales (11a) de la coque (11),
- à engager le mât (2) dans les logements en U (82, 91) de la plaque (81) et de la platine (90),
- à fermer par le loquet (93) le logement (91) de la platine (90),
- à basculer simultanément les bras (71, 72) de la paire (70) de bras inférieurs pour maintenir le mât (2) à sa partie inférieure,
- à verrouiller chaque navette (30) sur le jambe correspondante,
- à remonter les jambes (20) pour soulever les navettes (30) et les paires (60, 70) de bras supérieurs et inférieurs pour amener la platine (90) au contact du collier (5) du mât (2),
- à soulever le mât (2) du ponton (8) par l'intermédiaire des navettes (30) et des paires (60, 70) de bras en remontant les jambes (20),
- à retirer la structure portant au moins une éolienne pour la placer à l'écart du ponton,
- à redescendre les jambes pour reposer les navettes en positon basse en appui contre la coque,
- à déverrouiller chaque navette sur la jambe correspondante,
- à remonter les jambes en position haute,
- à fermer la porte de la structure,
- à déplacer la structure (10) portant ladite au moins éolienne ou hydrolienne jusqu'à un site d'installation sur un socle (4) préalablement installé sur le fond marin,
- à descendre les jambes en position basse ou intermédiaire,
- à verrouiller chaque navette sur la jambe correspondante,
- à remonter les jambes (20) pour soulever le mât (2) au moyen des navettes (30) et des paires (60, 70) de bras,
- à déplacer la structure (10) pour positionner le mât (2) dans l'alignement du socle (4),
- à descendre par les jambes (20), les navettes (30) et les paires (60, 70) de bras, pour engager le mât (2) dans le socle (4),
- à basculer les bras (71, 72) de la paire (70) de bras inférieurs en position escamotée, les mouvements horizontaux de la coque (11) étant repris par les moyens (80) de compensation de la paire (60) de bras supérieurs,
- à descendre les jambes (20), les navettes (30) et la paire (60) de bras supérieurs pour poser le mât (2) sur le socle (4),
- à ouvrir le logement en U de la platine.
- à déverrouiller les bras (61, 62) de la paire (60) de bras supérieurs,
- à basculer les bras (61, 62) de ladite paire (60) de bras supérieurs en position escamotée, et
- à retirer la structure (10).

## Claims

1. A structure (10) for transport and offshore installation of at least one wind turbine or underwater generator comprising a nacelle (3) and blades (4a) borne by a mast (2) intended to be mounted on a base (4) anchored on the sea bottom, **characterized in that** the structure (10) includes:
- a U-shaped floating hull (11) provided with two parallel lateral arms (11a), each having at least one leg (20) vertically movable relative to the hull (11) in flotation using movement mechanisms (25, 26, 27), and
- at least one assembly for supporting said at least one wind turbine or underwater generator, made up of two shuttles (30) opposite each other and each combined with a leg (20) and each having two pairs (60, 70) of arms that are higher and lower, respectively, and pivotably moveable around a horizontal axis (64) between a retracted position and an active position tilted against the mast (2) of the wind turbine or underwater generator, the arms (61, 62) of the pair (60) of higher arms including a means (80) for offsetting horizontal movements of the hull (11) relative to the mast (2) after said mast is introduced into the base (4) and after the tilting of the pair (70) of lower arms in the retracted position.

2. The structure (10) according to claim 1, **characterized in that** it includes two symmetrical assemblies each supporting a mast (2) of a wind turbine or underwater generator.

3. The structure (10) according to claim 1 or 2, **characterized in that** each shuttle (30) includes a means (40) for locking on the corresponding leg (20).

4. The structure according to any one of claims 1 to 3, **characterized in that** each arm (61, 62) of the pair (60) of higher arms has a length substantially equal to the height of the mast (2)

5. The structure according to claim 4, **characterized in that** each arm (61, 62) of the pair (60) of upper arms is provided with a means for adjusting the length of the arm (61, 62).

6. The structure (10) according to any one of claims 1 to 5, **characterized in that** each arm (71, 72) of the pair (70) of lower arms has a length substantially equal to half the distance separating the inner edges of the two lateral arms (11a) of the hull (11).

7. The structure (10) according to any one of claims 1 to 6, **characterized in that** the free ends of the arms (71, 72) of the pair (70) of lower arms together include an assembly (73) for gripping the mast (2).

8. The structure (10) according to any one of claims 1 to 7, **characterized in that** the compensating means (80) mounted at the free ends of the arms (61, 62) of the pair (60) of higher arms include an assembly for supporting the mast (2) via a collar (5) formed on said mast (2) and a sliding means (81, 85, 90, 92) for the horizontal movements of the hull (11) relative to the mast (2) after the introduction of said mast in the base (4) and the tilting of the pair (70) of lower arms in the retracted position.

9. The structure (10) according to claim 8, **characterized in that** the sliding means of the support assembly comprises, on one hand, a plate (81) provided with a U-shaped housing (82), fastened to the free end of one (61) of the arms (61, 62) of the pair (60) of higher arms and intended to cooperate with a locking system (83) mounted at the free end of the other arm (62) of the pair (60) of higher arms and, on the other hand, a platen (90) provided with a U-shaped housing (91) and movable via rolling members (85) on the plate (81) along a plane parallel to the assembly for supporting the mast.

10. The structure (10) according to claim 9, **characterized in that** the directions of movement of the platen (90) on the plate (81) form a 120° angle between them.

11. The structure (10) according to claim 9 or 10, **characterized in that** the platen (90) includes a latch (93) for closing the U-shaped housing (91).

12. The structure (10) according to any one of claims 9 to 11, **characterized in that** the U-shaped housings (82, 91), of the plate (81) and the platen (90), respectively, are oriented perpendicular to the longitudinal axis of the hull (11).

13. The structure according to any one of claims 9 to 11, **characterized in that** the U-shaped housings (82, 91), of the plate (81) and the platen (90), respectively, are oriented in the longitudinal axis of the hull (11) towards the open portion of said hull (11).

14. A method for transport and offshore installation of at least one wind turbine or underwater generator using a structure (10) according to any one of the preceding claims, **characterized in that** it comprises the following steps:
- positioning the structure (10) near a loading zone of the wind turbine or underwater generator;
- placing the legs (20) in the high position and the shuttles (30) in the low position bearing against the hull (11) with the arms of the two pairs (60, 70) of arms in the retracted position,
- lifting the wind turbine or underwater generator and placing the mast (2) of said wind turbine or underwater generator between the two lateral arms (11a) of the huil (11),
- tilting the arm (61) including the U-shaped housings (82, 91) of the pair (60) of higher arms in the active position to place the mast (2) in the U-shaped housings (82, 91) below the collar (5),
- tilting the other arm (62) of the pair (60) of higher arms in the active position and locking said arms (61, 62) relative to each other,
- closing the U-shaped housing (91) of the platen (90) using the latch (93),
- lowering the mast (2) to make the collar (5) bear on the platen (90),
- simultaneously tilting the arms (71, 72) of the pair (70) of lower arms in the active position to hold the lower portion of the mast (2),
- locking the platen to the arms,
- moving the structure (10) bearing said at least one wind turbine or underwater generator to an installation site on a base (4) previously installed on the sea bottom,
- lowering the legs (20) and locking each shuttle (30) on the corresponding leg (20),
- raising the legs (20) to lift the mast (2) using the shuttles (30) and pairs (60, 70) of arms,
- moving the structure (10) to position the mast (2) in the alignment of the base (4),
- lowering, using the legs (20), the shuttles (30) and the pairs (60) of arms to engage the mast in the base (4),
- unblocking the platen from the arms,
- tilting the arms (71, 72) of the pair (70) of lower arms in the retracted position, the horizontal movements of the hull (11) being picked up by the compensating means (80) of the pair of higher arms (60),
- lowering, using the legs (20), the shuttles (30) and the pairs (60) of higher arms to place the mast (2) on the base (4),
- opening the U-shaped housing of the platen,
- unlocking the arms (61, 62) of the pair (60) of higher arms,
- tilting the arms (61, 62) of the pair (60) of higher arms in the retracted position, and
- removing the structure (10).

15. A method for transport and offshore installation of at least one wind turbine or underwater generator using a structure (10) according to any one of claims 1 to 13, **characterized in that** it comprises the following steps:
- opening the door (15) of the hull (11),
- placing the legs (20) in an intermediate position and the shuttles (30) in a low position bearing against the hull (11),
- placing the arms (61, 62) of the pair (60) of higher arms in the active position and locking them relative to each other with the U-shaped housing (91) of the open platen (90),
- moving the structure (10) to place a pontoon (8) including at least one wind turbine or underwater generator between the lateral branches (11a) of the hull (11),
- engaging the mast (2) in the U-shaped housings (82, 91) of the plate (81) and the platen (90),
- closing the housing (91) of the platen (90) using the latch (93),
- simultaneously tilting the arms (71, 72) of the pair (70) of lower arms to hold the lower portion of the mast (2),
- locking each shuttle (30) on the corresponding leg,
- raising the legs (20) to lift the shuttles (30) and the pairs (60, 70) of higher and lower arms to bring the platen (90) in contact with the collar (5) of the mast (2),
- raising the mast (2) from the pontoon (8) via shuttles (30) and pairs (60, 70) of arms by lifting the legs (20),
- removing the structure bearing at least one wind turbine to place it away from the pontoon,
- relowering the legs to replace the shuttles in the lower position bearing against the hull,
- unlocking each shuttle on the corresponding leg,
- lifting the legs to the higher position,
- closing the door of the structure,
- moving the structure (10) bearing said at least one wind turbine or underwater generator to an installation site on a base (4) previously installed on the sea bottom,
- lowering the legs to a low or intermediate position,
- locking each shuttle on the corresponding leg,
- raising the legs (20) to lift the mast (2) using shuttles (30) and pairs (60, 70) of arms,
- moving the structure (10) to position the mast (2) in the alignment of the base (4),
- lowering, using the legs (20), the shuttles (30) and the pairs (60, 70) of arms, to engage the mast (2) in the base (4),
- tilting the arms (71, 72) of the pair (70) of lower arms in the retracted position, the horizontal movements of the hull (11) being picked up by the compensating means (80) of the pair (60) of higher arms,
- lowering the legs (20), the shuttles (30) and the pair (60) of higher arms to place the mast (2) on the base (4),
- opening the U-shaped housing of the platen,
- unlocking the arms (61, 62) of the pair (60) of higher arms,
- tilting the arms (61, 62) of said pair (60) of higher arms in the retracted position, and
- removing the structure (10).

## Patentansprüche

1. Struktur (10) für den Transport und die Aufstellung im Meer mindestens einer Wind- oder Wasserkraftantage, die eine Gondel (3) und Rotorblätter (4a) umfasst, die von einem Turm (2) getragen werden, der dazu bestimmt ist, auf einem Sockel (4) aufgestellt zu sein, der auf dem Meeresgrund verankert ist, **dadurch gekennzeichnet, dass** die Struktur (10) aufweist:
- einen U-förmigen schwimmenden Rumpf (11), der mit zwei gegenüberliegenden und parallelen seitlichen Schenkeln (11a) ausgestattet ist, die jewei!s mindestens ein Bein (20) tragen, das im Verhältnis zum schwimmenden Rumpf (11) mittels Verlagerungsmechanismen (25, 26, 27) vertikal verlagerbar ist, und
- mindestens eine Stützgruppe einer Wind- oder einer Wasserkraftaniage, die sich aus zwei gegenüberliegenden Rohrfängern (30) zusammensetzt, die jeweils einem Bein (20) zugeordnet sind und jeweils zwei jeweils obere und untere Armpaare (60, 70) tragen, die durch Schwenken um eine horizontale Achse (64) zwischen einer eingeklappten Stellung und einer aktiven, gegen den Turm (2) der Wind oder Wasserkraftanlage gekippten Stellung verlagerbar sind, wobei die Arme (61, 62) des oberen Armpaars (60) Kompensationsmittel (80) der horizontalen Verlagerungen des Rumpfs (11) im Verhältnis zum Turm (2) nach seiner Einführung in den Sockel (4) und dem Kippen des unteren Armpaars (70) in die eingeklappte Stellung aufweist.

2. Struktur (10) nach Anspruch 1, **dadurch gekennzeichnet, dass** sie zwei symmetrische Stützgruppen jeweils eines Turms (2) einer Wird- oder Wasserkraftanlage aufweist.

3. Struktur (10) nach Anspruch 1 oder 2, **dadurch gekennzeichnet, dass** jeder Rohrfänger (30) Verriegelungsmittel (40) auf dem entsprechenden Bein (20) aufweist.

4. Struktur nach einem der Ansprüche 1 bis 3, **dadurch gekennzeichnet, dass** jeder Arm (61, 62) des oberen Armpaars (60) eine Länge aufweist, die etwa der Höhe des Turms (2) entspricht.

5. Struktur nach Anspruch 4, **dadurch gekennzeichnet, dass** jeder Arm (61, 62) des oberen Armpaars (60) mit Einstellmitteln der Länge des Arms (61, 62) ausgestattet ist.

6. Struktur (10) nach einem der Ansprüche 1 bis 5, **dadurch gekennzeichnet, dass** jeder Arm (71, 72) des unteren Armpaars (70) eine Länge aufweist, die etwa der Hälfte des Abstands entspricht, der die inneren Ränder der zwei seitlichen Schenkel (11a) des Rumpfs (11) trennt.

7. Struktur (10) nach einem der Ansprüche 1 bis 6, **dadurch gekennzeichnet, dass** die freien Enden der Arme (71, 72) des unteren Armpaars (70) eine Spanngruppe (73) des Turms (2) aufweisen.

8. Struktur (10) nach einem der Ansprüche 1 bis 7, **dadurch gekennzeichnet, dass** die Kompensationsmittel (80), die an den freien Enden der Arme (61, 62) des oberen Armpaars (60) montiert sind, eine Stützgruppe des Turms (2) mittels einer Schelle (5), die auf dem besagten Turm (2) ausgebildet ist, und Gleitmittel (81, 85, 90, 92) für die horizontale Verlagerung des Rumpfs (11) im Verhältnis zum Turm (2) nach seiner Einführung in den Sockel (4) und dem Kippen des unteren Armpaars (70) in die eingeklappte Stellung aufweisen.

9. Struktur (10) nach Anspruch 8, **dadurch gekennzeichnet, dass** die Gleitmittel der Stützgruppe einerseits eine Platte (81) mit einer U-förmigen Aufnahme (82), die am freien Ende einer (61) der Arme (61, 62) des oberen Armpaars (60) befestigt und dazu bestimmt ist, mit einem Verriegelungssystem (83) zusammenzuarbeiten, das am freien Ende des anderen Arms (62) des oberen Armpaars (60) montiert ist und andererseits eine Platine (90) mit einer U-förmigen Aufnahme (91), die von Rollorganen (85) auf der Platte (81) gemäß einer parallelen Ebene zur Stützgruppe des Turms verlagerbar ist, umfassen.

10. Struktur (10) nach Anspruch 9, **dadurch gekennzeichnet, dass** die Richtungen der Verlagerung der Platine (90) auf der Platte (81) untereinander einen Winkel von 120° bilden.

11. Struktur (10) nach Anspruch 9 oder 10, **dadurch gekennzeichnet, dass** die Platine (90) einen Verschlussriegel (93) der U-förmigen Aufnahme (91) aufweist.

12. Struktur (10) nach einem der Ansprüche 9 bis 11, **dadurch gekennzeichnet, dass** die U-förmigen Aufnahmen (82, 91) jeweils der Platte (81) und der Platine (90) senkrecht zur Längsachse des Rumpfs (11) ausgerichtet sind.

13. Struktur nach einem der Ansprüche 9 bis 11, **dadurch gekennzeichnet, dass** die U-förmigen Aufnahmen (82, 91) jeweils der Platte (81) und der Platine (90) in der Längsachse des Rumpfs (11) in Richtung des geöffneten Teils des besagten Rumpfs (11) ausgerichtet sind.

14. Verfahren für den Transport und die Aufstellung im Meer mindestens einer Wind- oder Wasserkraftanlage mittels einer Struktur (10) nach einem der vorangehenden Ansprüche, **dadurch gekennzeichnet, dass** es aus den folgenden Schritten besteht:
- Positionieren der Struktur (10) in der Nähe einer Ladezone der Wind- oder Wasserkraftanlage,
- Platzieren der Beine (20) in hoher Stellung und der Rohrfänger (30) in niedriger Stellung in Abstützung gegen den Rumpf (11) mit den Armen der zwei Armpaare (60, 70) in der eingeklappten Stellung,
- Aufrichten der Wind- oder Wasserkraftanlage und Platzieren des Turms (2) der besagten Wind- oder Wasserkraftanlage zwischen den zwei seitlichen Schenkeln (11a) des Rumpfs (11),
- Kippen des Arms (61), der die U-förmigen Aufnahmen (82, 91) des oberen Armpaars (60) aufweist, in die aktive Stellung, um den Turm (2) in die U-förmigen Aufnahmen (82, 91) unter der Schelle (5) zu platzieren,
- Kippen des anderen Arms (62) des oberen Armpaars (60) in die aktive Stellung und Verriegeln der Arme (61, 62) untereinander,
- Verschließen der U-förmigen Aufnahme (91) der Platine (90) durch den Riegel (93),
- Senken des Turms (2), um die Schelle (5) in Abstützung auf die Platine (90) zu führen,
- gleichzeitiges Kippen der Arme (71, 72) des unteren Armpaars (70) in die aktive Stellung, um den Turm (2) an seinem unteren Teil zu halten,
- Verriegeln der Platine an den Armen,
- Verlagern der Struktur (10), die mindestens die besagte Wind- oder Wasserkraftanlage trägt, bis zu einem Aufstellungsort auf einem Sockel (4), der zuvor auf dem Meeresgrund installiert wurde,
- Senken der Beine (20) und Verriegeln jedes Rohrfängers (30) auf dem entsprechenden Bein (20),
- Aufrichten der Beine (20), um den Turm (2) mittels der Rohrfänger (30) und der Armpaare (60, 70) aufzurichten,
- Verlagern der Struktur (10), um den Turm (2) in der Flucht des Sockels (4) zu positionieren,
- Senken der Rohrfänger (30) und des oberen Armpaars (60) anhand der Beine (20), um den Turm in den Sockel (4) einzuführen,
- Entriegeln der Platine von den Armen,
- Kippen der Arme (71, 72) des unteren Armpaars (70) in eingeklappte Stellung, wobei die horizontalen Bewegungen des Rumpfs (11) von den Kompensationsmitteln (80) des oberen Armpaars (60) übernommen werden,
- Senken der Rohrfänger (30) und des oberen Armpaars (60) anhand der Beine (20), um den Turm auf den Sockel (4) zu stellen,
- Öffnen der U-förmigen Aufnahme der Platine,
- Entriegeln der Arme (61, 62) des oberen Armpaars (60),
- Kippen der Arme (61, 62) des oberen Armpaars (60) in eingeklappte Stellung, und
- Entfernen der Struktur (10).

15. Verfahren für den Transport und die Aufstellung im Meer mindestens einer Wind- oder Wasserkraftanlage mittels einer Struktur (10) nach einem der Ansprüche 1 bis 13, **dadurch gekennzeichnet, dass** es aus den folgenden Schritten besteht:
- Öffnen der Tür (15) des Rumpfs (11),
- Platzieren der Beine (20) in Übergangsstellung und der Rohrfänger (30) in niedrige Stellung in Abstützung gegen den Rumpf (11),
- Platzieren der Arme (61, 62) des oberen Armpaars (60) in aktive Stellung und Verriegeln derselben untereinander mit der geöffneten U-förmigen Aufnahme (91) der Platine (90),
- Verlagern der Struktur (10), um einen Ponton (8), der mindestens eine Wind- oder Wasserkraftanlage aufweist, zwischen den seitlichen Schenkeln (11a) des Rumpfs (11) zu platzieren,
- Einführen des Turms (2) in die U-förmigen Aufnahmen (82, 91) der Platte (81) und der Platine (90),
- Verschließen der Aufnahme (91) der Platine (90) durch den Riegel (93),
- gleichzeitiges Kippen der Arme (71, 72) des unteren Armpaars (70), um den Turm (2) an seinem unteren Teil zu halten,
- Verriegeln jedes Rohrfängers (30) auf dem entsprechenden Bein,
- Aufrichten der Beine (20), um die Rohrfänger (30) und die oberen und unteren Armpaare (60, 70) aufzurichten, um die Platine (90) in Kontakt mit der Schelle (5) des Turms (2) zu führen,
- Aufrichten des Turms (2) des Pontons (8) mittels der Rohrfänger (30) und der Armpaaare (60, 70) durch Aufrichten der Beine (20),
- Entfernen der Struktur, die mindestens eine Windkraftanlage trägt, um sie abseits vom Ponton zu platzieren,
- Senken der Beine, um die Rohrfänger in niedrige Stellung in Abstützung gegen den Rumpf zurück zu führen,
- Entriegeln jedes Rohrfängers auf dem entsprechenden Bein,
- Aufrichten der Beine in hohe Stellung,
- Schließen der Tür der Struktur,
- Verlagern der Struktur (10), die mindestens die besagte Wind- oder Wasserkraftanlage trägt, bis zu einem Aufstellungsort auf einem Sockel (4), der zuvor auf dem Meeresgrund installiert wurde,
- Senken der Beine in niedrige oder Übergangsstellung,
- Verriegeln jedes Rohrfängers auf dem entsprechenden Bein,
- Aufrichten der Beine (20), um den Turm (2) mittels der Rohrfänger (30) und der Armpaare (60, 70) aufzurichten,
- Verlagern der Struktur (10), um den Turm (2) in der Flucht des Sockels (4) zu positionieren,
- Senken der Rohrfänger (30) und der Armpaare (60, 70) anhand der Beine (20), um den Turm (2) in den Sockel (4) einzuführen,
- Kippen der Arme (71, 72) des unteren Armpaars (70) in eingeklappte Stellung, wobei die horizontalen Bewegungen des Rumpfs (11) von den Kompensationsmitteln (80) des oberen Armpaars (60) übernommen werden,
- Senken der Beine (20), der Rohrfänger (30) und des oberen Armpaars (60), um den Turm (2) auf den Sockel (4) zu stellen,
- Öffnen der U-förmigen Aufnahme der Platine,
- Entriegeln der Arme (61, 62) des oberen Armpaars (60),
- Kippen der Arme (61, 62) des besagten oberen Armpaars (60) in eingeklappte Stellung, und
- Entfernen der Struktur (10).
